# EUROPÄISCHE PATENTSCHRIFT

(11) **EP 1 186 621 B1**
(45) Veröffentlichungstag und Bekanntmachung des Hinweises auf die Patenterteilung: **16.08.2006**
(21) Anmeldenummer: 01116246.8
(22) Anmeldetag: 19.06.1995
(51) Int. Cl.: C08G 18/42, C09D 175/06

(54) **Verwendung einer Mehrschichtlackierung in der Automobilindustrie**
Use of a multilayer coating in the automotive industry
Utilisation d'un revêtement multicouche dans l'industrie automobile

(30) Priorität: 20.06.1994 DE 4421172; 15.02.1995 DE 19504947
(43) Veröffentlichungstag der Anmeldung: 13.03.2002
(62) Teilanmeldung aus: 95921686.2
(73) Patentinhaber: Bollig & Kemper GmbH & Co. KG, 50827 Köln (DE)
(72) Erfinder: Hille, Hans-Dieter, 51467 Bergisch Gladbach (DE)
(74) Vertreter: Dunkelberg, Oliver Thomas Michael

(56) Entgegenhaltungen:
- EP-A- 0 142 701
- EP-A- 0 548 727
- EP-A- 0 567 915
- EP-A- 0 574 972
- EP-A- 0 583 728
- EP-A- 0 590 484
- WO-A-92/19686
- WO-A-94/03512

## Beschreibung

Die Erfindung betrifft die Verwendung eines wasserverdünnbaren Kompensationslackes in der Automobilindustrie als Steinschlagschutz.

Ein wesentliches Problem bei der Lackierung von Oberflächen, insbesondere von Automobilkarosserien, ist die Steinschlagfestigkeit der gesamten Lackierung. Die Steinschlagfestigkeit wird bei konventionellen Lackierungen im wesentlichen durch die auf der Elektrocoat-Schicht befindliche und etwa 30 - 40 µm dicke Füllerschicht bestimmt, die einerseits die rauhe Oberfläche der Rohkarosserie für die nachfolgende Decklackierung glättet, kleinere Unebenheiten ausfüllt und hauptsächlich einen Schutz gegen mechanische Angriffe (Steinschlagschutzfunktion) bietet.

Eine konventionelle Autolackschicht nach dem sogenannten "Basislack-Klarlack-Verfahren" besteht beispielsweise aus insgesamt vier Schichten. Diese vier Schichten werden nacheinander, in getrennten Lackieranlagen aufgetragen. Die erste, direkt auf dem Autoblech befindliche Schicht ist die Elektrocoat-Schicht, die durch Elektrotauchlackierung - hauptsächlich kathodische Tauchlackierung (KTL) - zwecks Korrosionsschutz aufgebracht wird. Die zweite, auf der Elektrocoat-Schicht befindliche und etwa 30 - 40 µm dicke Schicht ist die sogenannte Füllerschicht, die einerseits die rauhe Oberfläche der Rohkarosserie für die nachfolgende Decklackierung glättet, kleinere Unebenheiten ausfüllt und hauptsächlich einen Schutz gegen mechanische Angriffe (Steinschlagschutzfunktion) bietet. Diese Schicht wird größtenteils durch elektrostatische Applikation eines Einbrennlackes, beispielsweise mit elektrostatischen Hochrotationsglocken und anschließendem Einbrennvorgang bei Temperaturen über 160 °C erzeugt.
Die dritte, auf der Füllerschicht befindliche Schicht ist die Basislackschicht, die durch entsprechende Pigmente der Karosserie die gewünschte Farbe gibt. Der wasserlösliche Basislack wird mit herkömmlichen Spritzverfahren aufgetragen.
Die vierte und oberste, auf der Basislackschicht befindliche Schicht ist die Klarlackschicht, die ebenfalls wie die Basislackschicht durch konventionelle Spritzverfahren aufgetragen wird und einerseits der Karosserie den gewünschten Glanz gibt und andererseits den Basislack vor Umwelteinflüssen (UV-Strahlung, Salzwasser etc.) schützt.

Ziel der Erfindung ist es, Lackierungen für Automobilkarosserien bereitzustellen, die durch Verwendung eines handelsüblichen Basislackes die von der Automobilindustrie vorgeschriebenen Tests erfüllen, und gleichzeitig die Funktion des herkömmlichen Füllers oder die Funktion des herkömmlichen Füllers und der herkömmlichen Basislackschicht ersetzen.

Diese Aufgabe wird erfindungsgemäß gelöst durch die Verwendung eines wasserverdünnbaren Kompensationslackes, enthaltend 40 bis 80 Gew.-% Bindemittel in Mischung mit einem handelsüblichen Basislack zur Lackierung von Automobilkarosserien mit einer Elektrotauch-Grundierung, einer zweiten, sogenannten Füllerschicht, einer dritten Schicht aus einem wasserlöslichen Basislack und einer Klarlack-Deckschicht, dadurch gekennzeichnet, daß die Füllerschicht durch ein Gemisch aus dem wasserverdünnbarem Kompensationslack und handelsüblichem Basislack in einer Dicke von 10 bis 20 µm ersetzt ist.

Eine weitere Ausführungsform der vorliegenden Erfindung betrifft die Verwendung eines wasserverdünnbaren Kompensationslackes, enthaltend 40 bis 80 Gew.-% Bindemittel in Mischung mit einem handelsüblichen Basislack zur Lackierung von Automobilkarosserien mit einer Elektrotauch-Grundierung, einer Schicht aus dem Gemisch aus dem wasserverdünnbarem Kompensationslack und handelsüblichem Basislack in einer Dicke von 10 bis 20 µm und einer Klarlack-Deckschicht.

Der Kompensationslack kann zusätzlich bis zu 20 Gew.-% Pigmente enthalten.

Der erfindungsgemäß verwendete Kompensationslack kann darüber hinaus in Wasser verdünnbare Harzsysteme, Lösemittel, Pigmente, Additive und Wasser enthalten. Dieser Kompensationslack wird mit handelsüblichen Basislacken gemischt.

Ein herkömmlicher, wasserlöslicher Basislack besteht in der Regel aus

| | |
|---|---|
| 5 bis | 15 Gew.% Pigmenten, |
| 10 bis | 20 Gew.% Bindemitteln, |
| 0 bis | 20 Gew.% organischen lösemitteln, |
| 0 bis | 5 Gew.% Additiven, |
| 40 bis | 85 Gew.% Wasser. |

Unter Pigmenten versteht man gemäß der vorliegenden Erfindung im Anwendungsmedium praktisch unlösliche, anorganische oder organische, bunte oder unbunte Farbmittel, wie sie beispielsweise im "Glasurit-Handbuch Lacke und Farben", 11. Aufl., Curt R. Vincentz Verlag, Hannover 1984, S. 97 - 108 beschrieben sind, also auch Ruß, Titandioxid, Effektpigmente wie Aluminiumbronzen und Glimmerpigmem und viele andere mehr.

Unter Bindemittel versteht man hier und im folgenden solche Stoffe, die gleiche oder verschiedenartige Stoffe miteinander verbinden, insbesondere die nichtflüchtigen Anteile eines Lackes ohne Pigment und Füllstoff, aber einschließlich. Weichmachern, Trockenstoffen und anderen nichtflüchtigen Additiven, vorzugsweise die wasserverträglichen, filmbildenden Harze, wie beispielsweise Polyester-, Polyurethan- und Acrylatharze und viele mehr, wie sie beispielsweise im "Glasurit-Handbuch Lacke und Farben", loc. cit. S. 19 - 96 oder in H. Wagner, H.F. Sarx "Lackkunstharze", Carl Hanser Verlag München 1972 beschrieben sind.

In einer weiteren erfindungsgemäßen Ausführungsform liegt das Verhältnis von Bindemittel zu Pigmenten beim wasserverdünnbaren Kompensationslack zwischen 10 : 1 und 15 : 1.
Sofern der wasserverdünnbare Kompensationslack Pigmente enthält, kann dieses Pigment ein Effektpigment, insbesondere eine Aluminiumbronze sein.
Gemäß einer bevorzugten Ausführungsform der Erfindung ist das Bindemittel des erfindungsgemäß verwendeten Kompensationslackes ein wasserverträgliches blockiertes Isocyanat, ein Polyurethan-, Polyester- und/oder Melaminharz.
Dieses Polyesterharz hat in einer weiteren erfindungsgemäßen Form ein mittleres Molekulargewicht von 5.000 bis 10.000; weist genügend Carboxylgruppen auf, die dem Polyesterharz nach einer Neutralisation mit Basen ausreichend wasserverdünnbare Eigenschaften verleihen; und enthält funktionelle Gruppen, insbesondere Hydroxyl-Gruppen, durch die das Polyesterharz vernetzungsfähig gemacht wird.
Das Polyesterharz kann eine OH-Zahl zwischen 20 und 80, insbesondere zwischen 30 und 60 und eine Säurezahl zwischen 10 und 50, insbesondere zwischen 15 und 35, aufweisen:
Seine Glasübergangstemperatur (Tg) kann zwischen -20 und +30 °C liegen.
In einer weiteren Ausführung ist der Polyester insbesondere ein Polykondensationsprodukt eines Diols mit einer Dicarbonsäure in Gegenwart einer mehr als 2 funktionelle Gruppen enthaltenden Komponente.
Das Diol kann aus der Gruppe von 1,6-Hexandiol, Neopentylglykol, 1,4-Dimethylolcyclohexan, Hydroxypivalin-säureneopentylglykolester (HPN), perhydriertem Bisphenol-A, Trimethylolpropan und Trimethylolpropanmonoallylether ausgewählt sein.
Die Dicarbonsäure kann aus der Gruppe von Adipinsäure, Phthalsäure, Isophthalsäure, Hexahydrophthalsäure, Tetrahydrophthalsäure, oder deren möglichen Anhydriden, insbesondere aus der Gruppe der dimeren Fettsäuren, ausgewählt sein.
Die mehr als 2 funktionelle Gruppen enthaltende Komponente kann ein Triol, eine Tricarbonsäure, eine Monohydroxydicarbonsäure, insbesondere eine Dihydroxymonocarbonsäure, vorzugsweise Trimellithsäure, Trimethylolpropan und Dimethylolpropionsäure sein.
Die besten Eigenschaften können mit Bindemitteln erzielt werden, die nach dem Einbrennen Elastomer-Charakter aufweisen. Das können bestimmte Polyurethane sein, bei denen durch segmentienen Aufbau eine bestimmte Folge von Weich- und Hartsegmenten eingestellt wird. Bevorzugte Bindemittel sind weiche Polyesterharze mit hohem Molekulargewicht und hoher Hydroxyfunktionalität, die durch Polykondensation von Dimerfettsäuren mit Polyalkoholen, vorzugsweise Dialkoholen, erhalten werden und deren Verzweigungsstellen durch trifunktionelle (Hydroxy)carbonsäuren erzeugt werden. Diese Polyesterharze werden auch mit blockierten Polyisocyanaten oder Melaminharzen als Vernetzern eingesetzt.
Des weiteren kann der wasserverdünnbare Steinschlagschutz- oder Kompensationslack zusätzlich organische Lösemittel und Additive enthalten.
Unter dem Begriff Lösemittel versteht man solche organischen Stoffe, die andere auf physikalischem Wege in Lösung bringen kann wie beispielsweise niedere Alkohole, Glykolether, niedere Ketone, insbesondere die mit Wasser in weiten Bereichen mischbaren organischen Lösemittel wie Butanol, Isopropanol, Methylethylketon und viele mehr, wie sie beispielsweise im "Glasurit-Handbuch Lacke und Farben", loc. cit. S. 117 - 138 beschrieben sind.

Als Additive bezeichnet man Stoffe, die anderen, insbesondere flüssigen Stoffen in kleinen Mengen zugesetzt werden, um deren Eigenschaften in gewünschter Weise zu verändern oder deren Verarbeitung zu erleichtern. Hierzu zählen Glanz-, Netz-, Trocken-, Absetzverhinderungs-, Antiausschwimm-, Antihaut-, Verlaufs-, Trenn- und Gleitmittel sowie UV-Absorber, Biozide, Weichmacher, Antistatika, Stabilisatoren, Antioxidantien, Antiozonantien, Füllstoffe, Viskositätsverbesserer Alterungsschutzmittel, Detergentien, Dispergiermittel, Entschäumer, Erhärtungsbeschleuniger, Erhärtungsverzögerer oder Trockenstoffe, wie sie beispielsweise im "Glasurit-Handbuch Lacke und Farben", loc. cit. S. 113 - 117 beschrieben sind.

Der Kompensationslack dient zur Konditionierung des Basislackes, d.h. er verleiht einem herkömmlichen Basislack Steinschlagschutz- und Füllereigenschaften, so daß der Basislack entweder nur die Füllerschicht ersetzt (Vierschichten-Aufbau) oder die Füller- und Basislackschicht gleichzeitig ersetzt (Dreischichten-Aufbau).
Diese Konditionierung stellt insbesondere die Haftung der Steinschlagschutzschicht so ein, daß bei einer starken, von außen auf die gesamte Lackierung einwirkenden mechanischen Belastung, die ohne die erfindungsgemäße Schicht bei Verwendung einer Drei-Schicht-Lackierung (also ohne Füller-Schicht) zum Abplatzen der Elektrocoat-Schicht führen würde, die Haftung zur Elektrocoat-Schicht derart eingestellt ist, daß sich einerseits die Steinschlagschutzschicht zwar von der Elektrocoat-Schicht löst, aber letztere nicht mit vom Karosserieblech reißt, andererseits die Abplatzungen möglichst klein sind. Letzteres kann erreicht werden durch Zusätze, die die Rückprallelastizität des Steinschlagschutzlackes gezielt erhöhen. Mit Rückprallelastizität ist die Eigenschaft gemeint, durch die ein mechanischer Impuls (Steinschlag) durch eine elastische Deformation aufgefangen wird. Dadurch wird eine Verletzung des Materials verhindert.

Zur Überprüfung des durch den Kompensationslack konditionierten Basislackes durch die vorgegebene Belastbarkeit der entsprechenden Schicht zugrundegelegten Eigenschaft gibt es verschiedene Methoden, die zwar auf das spezielle Anwendungsgebiet hin angepaßt wurden, aber alle darauf abzielen, daß die mechanische Einwirkung möglichst genau reproduziert werden kann. So gibt es beispielsweise in der Automobilindustrie vorgeschriebene Tests, die versuchen, den Steinschlag durch das Auftreffen einer Kugel (Mercedes-Benz AG, Lackprüfungsgerät mit Kugelstoßprüfgerät bei Temperaturen von -20 bis +50 °C, einem Kugeldurchmesser, wahlweise von 2 bis 4 mm und einer Schußgeschwindigkeit von 50 bis 300 km/h) oder eines meißelartigen Prüfkörpers (Test VDA 621-428 der BMW-AG) auf die fertig lackierte Oberfläche bei genau definierten Temperaturen (Raumtemperatur und -20 °C) und weiteren, genau definierten Parametern zu simulieren.
Ein weiterer, besonderer Vorteil des Ersetzens der herkömmlichen Füller-Schicht durch die erfindungsgemäße Verwendung des Kompensationslackes liegt darin, daß insbesondere das Einbrennen dieser Füllerschicht entfällt. Die aus Basislack und Klarlack erhältliche Steinschlagschutzschicht trocknet bei einer Temperatur zwischen 50 und 90 °C und braucht folglich beispielsweise nur mit Infrarotstrahlern getrocknet oder nur vorgetrocknet zu werden. Das bedeutet erhebliche Energie- und Zeiteinsparungen. Auch braucht die durch die erfindungsgemäße Verwendung erhältliche Steinschlagschutzschicht nicht in der gleichen Schichtstärke wie die Füllerschicht aufgetragen werden, es genügt die Aufbringung einer zwischen 10 bis 20 µm dicken Schicht, um die gleichen mechanischen Eigenschaften zu erreichen, wie die konventionelle Füller-Schicht. Das wiederum bedeutet erhebliche Einsparungen an Material.

Diese Konditionierung erfolgt durch Zugabe der für die gewünschten Eigenschaften der Schicht aus Basislack und Klarlack erforderlichen Komponenten.

Diese Konditionierung hat die Aufgabe, insbesondere die Haftung der aus Basislack und Klarlack erhältlichen Schicht so einzustellen, daß bei einer starken, von außen auf die gesamte Lackierung einwirkenden mechanischen Belastung, die ohne die erfindungsgemäße Schicht aus Basislack und Klarlack bei Verwendung einer Drei-Schicht-Lackierung (also ohne Füller-Schicht) zum Abplatzen der Elektrocoat-Schicht führen würde, die Haftung zur Elektrocoat-Schicht derart eingestellt ist, daß sich einerseits die Schicht aus Basislack und Klarlack zwar von der Elektrocoat-Schicht löst, aber letztere nicht mit vom Karosserieblech reißt, andererseits die Abplatzungen möglichst klein sind. Letzteres kann erreicht werden durch Zusätze, die die Rückprallelastizität des Lackes gezielt erhöhen. Mit Rückprallelastizität ist die Eigenschaft gemeint, durch die ein mechanischer Impuls (Steinschlag) durch eine elastische Deformation aufgefangen wird. Dadurch wird eine Verletzung des Materials verhindert.

Bei den o.a., von außen auf die gesamte Lackierung wirkenden mechanischen Belastungen kann es sich um jedwede Einwirkungen mechanischer Art, wie beispielsweise Steinschlag bei Fahrzeuglackierungen, Aneinanderreiben oder - schlagen lackierter Teile oder von beliebigen Gegenständen auf lackierten Oberflächen handeln.

Als Komponenten für die Konditionierung der mechanischen Eigenschaften können Bindemittel wie beispielsweise ein wassetverträgliches blockiertes Isocyanat, ein Melamin-, Polyurethan- oder Polyesterharz, organische Lösemittel, Pigmente oder Additive eingesetzt werden.

Diese Komponenten können als Kompensationslack mit einer Festkörperkmuentration von 20 bis 80 Gew.% zugegeben werden.

Der besondere Vorteil bei der Verwendung des Kompensationslackes liegt darin, daß alle Komponenten in dem auf das jeweilige Basislack-System angepaßten Lack, erhältlich durch einen Kompensationslack und einem handelsüblichen Basislack in der Spritzanlage oder deren unmittelbaren Umgebung zugegeben werden können.

Das Verfahren zur Lackierung von Automobilkarosserien besteht aus Aufbringen einer Elektrotauch-Grundierung (KTL), Einbrennen derselben, Aufbringen des erfindungsgemäßen Steinsschlagschutzlackes, Trocknen desselben bei 50 - 90 °C, Aufbringen eines Basislackes, Trocknen desselben bei 50 - 100 °C, Aufbringen eines Klarlackes und anschließendes gemeinsames Einbrennen der drei Lackschichten bei 130 - 160 °C. Der erfindungsgemäße Lackaus Basislack und Klarlack kann zur Lackierung aller festen, ebenen, oder nichtebenen, glatten, oder nichtglatten, metalischen Oberflächen, die nach dem o.a. "Basislack/Klarlack"-Verfahren lackiert und gegen von außen auf die gesamte Lackierung wirkenden mechanischen Belastungen geschützt werden sollen, zwischen Elektrocoat- und Basislackschicht eingesetzt werden. Vorzugsweise handelt es sich um glatte metallische Oberflächen,wie sie beispielsweise bei der Lackierung von Anlagen, Geräten, Fenstern, insbesondere von fahrzeugen (Autos, Lastkraftwagen, Fahrrädern usw.)vorkommen.

Die folgenden Beispiele dienen der Erläuterung der Erfindung.

### BEISPIELE

### Herstellungsbeispiel A für ein Poylesterharz

In einem Reaktionsgefäß mit Rühr-, Kühl- und Heizvorrichtung sowie einer Füllkörperkolonne werden 1187 g 1,6 Hexandiol und 1473 g Dimerfettsäure (Pripol 1009 von der Fa. UNICHEMA) eingewogen und so aufgeheizt, daß die Kolonnenkopftemperatur 100 °C nicht übersteigt. Die maximale Veresterungstemperatur beträgt 220 °C. Bei einer Säurezahl unter 5 wird auf 150 °C abgekühlt und 1499 g Admerginsäure (ein Additionsprodukt aus Leinölfettsäure und Maleinsäureanhydrid, Handelsprodukt der Firma HARBURGER FETTCHEMIE) eingewogen. Es wird wieder so aufgeheizt, daß die Kolonnenkopftemperatur 100 °C nicht übersteigt. Die maximale Veresterungstemperatur beträgt 220 °C. Bei einer Säurezahl von 38 wird abgekühlt und mit 1658 g Butylglykol verdünnt. Man erhält einen Polyester mit einem Festkörpergehalt von 70 % und einer Hydroxylzahl von 57.

### Herstellungsbeispiel B für ein Poylesterharz

In einem Reaktionsgefäß mit Rühr-, Kühl- und Heizvorrichtung sowie einer Füllkörperkolonne werden 598 g Dimethylolcyclohexan, 3098 g Dimerfettsäure (Pripol 1009 von der Fa. UNICHEMA) und 371 g Dimethylolpropionsäure eingewogen und so aufgeheizt, daß die Kolonnenkopftemperatur 100 °C nicht übersteigt. Die maximale Veresterungstemperatur beträgt 220 °C. Bei einer Säurezahl von 30 wird abgekühlt und mit 1651 g Butylglykol verdünnt. Man erhält einen Polyester mit einem Festkörpergehalt von 70 % und einer Hydroxylzahl von 30.

### Beispiel 1 (Kompensationslack)

337 Teile des Polyesterharzes aus Herstellungsbeispiel A werden unter Rühren mit einer Mischung aus 277 Teilen vollentsalztem Wasser und 12 Teilen Dimethylethanolamin versetzt. Dazu werden unter weiterem Rühren 39 Teile des handelsüblichen Melaminharzes Luwipal LR 8852 gegeben. Der pH-Wert beträgt 9,06. Die Viskosität wird mit vollentsalztem Wasser auf 130 sec. eingestellt, gemessen im DIN 4 Becher.

### Beispiel 2 (Kompensationslack)

404 Teile des Polyesterharzes aus Herstellungsbeispiel B werden unter Rühren mit einer Mischung aus 457 Teilen vollentsalztem Wasser und 10 Teilen Dimethylethanolamin versetzt. Dazu werden unter weiterem Rühren 47 Teile des handelsüblichen Melaminharzes Luwipal LR 8852 gegeben. Der pH-Wert beträgt 9,06. Die Viskosität wird mit vollentsalztem Wasser auf 130 sec. eingestellt, gemessen im DIN 4 Becher.

### Beispiel 3 (Kompensationslack)

206 Teile des Polyesterharzes aus Herstellungsbeispiel B werden unter Rühren mit einer Mischung aus 289 Teilen vollentsalztem Wasser und 7,5 Teilen Dimethylethanolamin versetzt. Dazu werden unter weiterem Rühren 298 Teile des blockierten Isocyanates Bayhydrol LS 2050 von der Fa. Bayer AG Leverkusen gegeben. Der pH-Wert wird mit einer 10%igen wäßrigen Dimethylethanolamin-Lösung auf 8,5 eingestellt. Die Viskosität wird mit vollentsalztem Wasser auf 130 sec. eingestellt, gemessen im DIN 4 Becher.

### Beispiel 4 (Basislack mit integrierten Steinschlagschutz)

100 Teile eines Metallic Basislackes des Farbtons Silber, hergestellt wie in der europäischen Patentschrift 502 934 beschrieben, werden unter Rühren mit 135 Teilen des Kompensationslackes aus Beispiel 3 vermischt und auf eine Viskosität von 45 sec. (DIN 4) eingestellt.
Der so modifizierte Basislack wird auf mit einer handelsüblichen Elektrotauchlackierung beschichtete phosphatierte Stahlbleche gespritzt und nach einer Ablüftzeit von 5 Minuten mit dem unmodifizierten Basislack überlackiert.
Danach wurde in üblicher Weise, wie oben beschrieben, mit Klarlack überlackiert. Die Schichtdicke der ersten, modifizierten Basislackschicht betrugt 9 µm, die der zweiten, unmodifizierten 7 µm.
Alle Bleche zeigten einen guten, zum Serienstandard vergleichbaren Decklackstand.
Die Bleche wurden einem Steinschlagtest unterzogen, wie er bei Mercedes Benz AG üblich ist. Dabei werden die Testbleche zunächst auf -20 °C gekühlt und bei dieser Temperatur mit einer Stahlkugel von 3 mm Durchmesser mit einer Geschwindigkeit von 250 km/h beschossen. Hierbei dürfen keine Durchschläge zum Blech auftreten, und die Abplatzungen dürfen nicht größer als 8 mm² sein.
Alle Testbleche bestanden diesen Test.

## Patentansprüche

1. Verwendung eines wasserverdünnbaren Kompensationslackes, enthaltend 40 bis 80 Gew.-% Bindemittel in Mischung mit einem handelsüblichen Basislack zur Lackierung von Automobilkarosserien mit einer Elektrotauch-Grundierung, einer zweiten, sogenannten Füllerschicht, einer dritten Schicht aus einem wasserlöslichen Basislack und einer Klarlack-Deckschicht, **dadurch gekennzeichnet, daß** die Füllerschicht durch ein Gemisch aus dem wasserverdünnbarem Kompensationslack und handelsüblichem Basislack in einer Dicke von 10 bis 20 µm ersetzt ist.

2. Verwendung eines wasserverdünnbaren Kompensationslackes, enthaltend 40 bis 80 Gew.-% Bindemittel in Mischung mit einem handelsüblichen Basislack zur Lackierung von Automobilkarosserien mit einer Elektrotauch-Grundierung, einer Schicht aus dem Gemisch aus dem wasserverdünnbarem Kompensationslack und handelsüblichem Basislack in einer Dicke von 10 bis 20 µm und einer Klarlack-Deckschicht.

3. Verwendung nach Anspruch 1 oder 2, **dadurch gekennzeichnet, dass** der wasserverdünnbare Kompensationslack zusätzlich bis zu 20 Gew.-% Pigmente enthält

4. Verwendung nach Anspruch 3, **dadurch gekennzeichnet, dass** das Verhältnis von Bindemittel zu Pigmenten zwischen 10 : 1 und 15 : 1 liegt.

5. Verwendung nach einem der vorhergehenden Ansprüche, **dadurch gekennzeichnet, dass** das Bindemittel ein wasserverträgliches Acrylatharz ist.

6. Verwendung nach einem der vorhergehenden Ansprüche, **dadurch gekennzeichnet, dass** das Bindemittel ein wasserverträgliches blockiertes Isocyanat, ein Polyurethan-, Polyester- und/oder Melaminharz ist.

7. Verwendung nach einem der vorhergehenden Ansprüche, **dadurch gekennzeichnet, dass** das Polyesterharz ein mittleres Molekulargewicht von 5.000 bis 10.000 hat; genügend Carboxylgruppen aufweist, die dem Polyesterharz nach einer Neutralisation mit Basen ausreichend wasserverdünnbare Eigenschaften verleiht; und funktionelle Gruppen, insbesondere Hydroxyl-Gruppen, enthält, durch die das Polyesterharz vernetzungsfähig gemacht wird.

8. Verwendung nach Anspruch 6 oder 7, **dadurch gekennzeichnet, dass** das Polyesterharz eine OH-Zahl zwischen 20 und 80, insbesondere zwischen 30 und 60 und eine Säurezahl zwischen 10 und 50, insbesondere zwischen 15 und 35, aufweist.

9. Verwendung nach einem der Ansprüche 6 bis 8, **dadurch gekennzeichnet, dass** das Polyesterharz eine Glasübergangstemperatur (Tg) zwischen -20 und +30 °C aufweist.

10. Verwendung nach einem der Ansprüche 6 bis 9, **dadurch gekennzeichnet, dass** der Polyester ein Polykondensationsprodukt eines Diols mit einer Dicarbonsäure in Gegenwart einer mehr als 2 funktionelle Gruppen enthaltenden Komponente ist.

11. Verwendung nach Anspruch 10, **dadurch gekennzeichnet, dass** das Diol aus der Gruppe von 1,6-Hexandiol, Neopentylglykol, 1,4-Dimethylolcyclohexan, Hydroxypivalinsäureneopentylglykolester (HPN), perhydriertem Bisphenol-A, Trimethylolpropan und Trimethylolpropanmonoallylether ausgewählt ist.

12. Verwendung nach Anspruch 10 oder 11, **dadurch gekennzeichnet, dass** die Dicarbonsäure aus der Gruppe von Adipinsäure, Phthalsäure, Isophthalsäure, Hexahydrophthalsäure, Tetrahydrophthalsäure, oder deren möglichen Anhydriden, insbesondere aus der Gruppe der dimeren Fettsäuren, ausgewählt ist.

13. Verwendung einem der Ansprüche 10 bis 12, **dadurch gekennzeichnet, daß** die mehr als 2 funktionelle Gruppen enthaltende Komponente ein Triol, eine Tricarbonsäure, eine Monohydroxydicarbonsäure, insbesondere eine Dihydroxymonocarbonsäure, ist.

14. Verwendung einem der Ansprüche 10 bis 13, **dadurch gekennzeichnet, daß** die mehr als 2 funktionelle Gruppen enthaltende Komponente Trimellithsäure, Trimethylolpropan, insbesondere Dimethylolpropionsäure, ist.

15. Verwendung nach einem der vorhergehenden Ansprüche, **dadurch gekennzeichnet, dass** der Kompensationslack zusätzlich organische Lösemittel und Additive enthält.

## Claims

1. Use of a water-dilutable compensation paint containing 40 to 80 % by weight of binder in mixture with a commercial base coat for coating motor vehicle bodies with an electrodeposition primer, a second so-called filler layer, a third layer of a water-soluble base coat and a clear top coat **characterised in that** the filler layer is replaced by a mixture of the water-dilutable compensation paint and commercial base coat in a thickness of 10 to 20 µm.

2. Use of a water-dilutable compensation paint containing 40 to 80 % by weight of binder in mixture with a commercial base coat for coating motor vehicle bodies with an electrodeposition primer, a layer of the mixture of the water-dilutable compensation paint and commercial base coat in a thickness of 10 to 20 µm and a clear top coat.

3. Use according to claim 1 or 2 **characterised in that** the water-dilutable compensation paint additionally contains up to 20 % by weight of pigments.

4. Use according to claim 3 **characterised in that** the ratio of binder to pigments is between 10 : 1 and 15 : 1.

5. Use according to one of the preceding claims **characterised in that** the binder is an acrylate resin compatible with water.

6. Use according to one of the preceding claims **characterised in that** the binder is a blocked isocyanate compatible with water, a polyurethane resin, a polyester resin and/or a melamine resin.

7. Use according to one of the preceding claims **characterised in that** the polyester resin has an average molecular weight of 5,000 to 10,000; exhibits sufficient carboxyl groups which provide the polyester resin, after neutralisation with bases, with sufficient water-dilutable properties; and contains functional groups, in particular hydroxyl groups by which the polyester resin is made crosslinkable.

8. Use according to claim 6 or 7 **characterised in that** the polyester resin exhibits an OH number between 20 and 80, in particular between 30 and 60 and an acid number between 10 and 50, in particular between 15 and 35.

9. Use according to one of claims 6 to 8 **characterised in that** the polyester resin has a glass transition temperature (Tg) between -20 and +30 °C.

10. Use according to one of claims 6 to 9 **characterised in that** the polyester is a polycondensation product of a diol with a dicarboxylic acid in the presence of a compound containing more than 2 functional groups.

11. Use according to claim 10 **characterised in that** the diol is selected from the group of 1,6-hexane diol, neopentyl glycol, 1,4-Dimethylol cyclohexane, hydroxypivalic acid neopentyl glycol ester (HPB), perhydrogenated bisphenol A, trimethylol propane and trimethylol propane monoallyl ether.

12. Use according to claim 10 or 11 **characterised in that** the dicarboxylic acid is selected from the group of adipic acid, phthalic acid, isophthalic acid, hexadydrophthalic acid, tetrahydrophthalic acid or their possible anhydrides, in particular from the group of dimeric fatty acids.

13. Use according to one of claims 10 to 12 8 **characterised in that** the component containing more than 2 functional groups is a triol, a tricarboxylic acid, a monohydroxydicarboxylic acid, in particular a dihydroxymonocarboxylic acid.

14. Use according to one of claims 10 to 13 **characterised in that** the component containing more than 2 functional groups is trimellitic acid, trimethylol propane, in particular dimethylol propionic acid.

15. Use according to one of the preceding claims **characterised in that** the compensation paint additionally contains organic solvents and additives.

## Revendications

1. Utilisation d'une laque de compensation hydrosoluble, contenant 40 à 80 % en poids de liant mélangé avec une laque de base en vente dans le commerce, pour le laquage de carrosseries d'automobiles avec un apprêt électro-phorétique, d'une seconde couche dite de charge, d'une troisième couche composée d'une laque de base hydrosoluble et d'une couche de recouvrement transparente, **caractérisée en ce que** ladite couche de charge est remplacée par un mélange à base de laque de compensation hydrosoluble et de laque de base en vente dans le commerce d'une épaisseur comprise entre 10 et 20 µm.

2. Utilisation d'une laque de compensation hydrosoluble, contenant 40 à 80 % en poids de liant mélangé avec une laque de base en vente dans le commerce pour le laquage de carrosseries d'automobiles avec un apprêt électro-phorétique, d'une couche composée du mélange de laque de compensation hydrosoluble et de laque de base en vente dans le commerce d'une épaisseur comprise entre 10 et 20 µm et d'une couche de revêtement transparente.

3. Utilisation selon l'une des revendications 1 ou 2, **caractérisée en ce que** la laque de compensation hydrosoluble contient de surcroît une quantité de pigments allant jusqu'à 20 %.

4. Utilisation selon la revendication 3, **caractérisée en ce que** le rapport entre le liant et les pigments est compris entre 10 : 1 et 15 : 1.

5. Utilisation selon l'une des revendications précédentes, **caractérisée en ce que** le liant est une résine acrylique compatible avec l'eau.

6. Utilisation selon l'une des revendications précédentes, **caractérisée en ce que** le liant est un isocyanate bloqué compatible avec l'eau, une résine de polyuréthane, de polyester et/ou de mélamine.

7. Utilisation selon l'une des revendications précédentes, **caractérisée en ce que** la résine de polyester a une masse moléculaire moyenne comprise entre 5 000 et 10 000; présente assez de groupes carboxyles conférant à la résine de polyester suffisamment de propriétés diluables après une neutralisation avec des bases; et contient des groupes fonctionnels, en particulier des groupes hydroxyles rendant la résine de polyester réticulables.

8. Utilisation selon l'une des revendications 6 ou 7, **caractérisée en ce que** la résine de polyester présente un indice OH compris entre 20 et 80, en particulier entre 30 et 60, et un indice d'acidité compris entre 10 et 50, en particulier entre 15 et 35.

9. Utilisation selon l'une des revendications 6 à 8, **caractérisée en ce que** la résine de polyester présente une température de transition vitreuse (Tg) comprise entre - 20 et +30°C.

10. Utilisation selon l'une des revendications 6 à 9, **caractérisée en ce que** le polyester est un produit de polycondensation d'un diol ayant un acide dicarbonique en présence d'un composant contenant plus de 2 groupes fonctionnels.

11. Utilisation selon la revendication 10, **caractérisée en ce que** le diol est choisi parmi le groupe d'hexane-diol-1,6, de néopentylglycol, de cyclohexanediméthylol-1,4, d'ester néopentylglycol de l'acide d'hydroxypivaline (HPN), de bisphénol-A perhydraté, de triméthylolpropane et d'éther monoallylique de triméthylpropane.

12. Utilisation selon l'une des revendications 10 ou 11, **caractérisée en ce que** l'acide dicarbonique est choisi parmi le groupe de l'acide adipique, l'acide phtalique, l'acide isophtalique, l'acide hexahydrophtalique, l'acide tétrahydrophtalique ou leurs anhydrides possibles, en particulier du groupe des acides gras dimères.

13. Utilisation selon l'une des revendications 10 à 12, **caractérisée en ce que** le composant contenant plus de 2 groupes fonctionnels est un triol, un acide tricarbonique, un acide monohydroxydicarbonique, en particulier un acide dihydroxymonocarbonique.

14. Utilisation selon l'une des revendications 10 à 13, **caractérisée en ce que** le composant contenant plus de 2 groupes fonctionnels est un acide trimellitique, un triméthylolpropane, en particulier un acide diméthylol-propionique.

15. Utilisation selon l'une des revendications précédentes, **caractérisée en ce que** la laque de compensation contient de surcroît des liants organiques et des additifs.
